# EUROPEAN PATENT APPLICATION

(11) **EP 4 421 537 A1**
(43) Date of publication of application: **28.08.2024**
(21) Application number: 24158994.4
(22) Date of filing: 22.02.2024
(51) Int. Cl.: G01T 1/17, H04N 5/32

(54) **RADIATION DETECTOR, TRIGGER SIGNAL GENERATOR, AND RADIATION ANALYZING SYSTEM**

(30) Priority: 22.02.2023 JP 2023026382
(71) Applicant: Rigaku Corporation, Akishima-shi Tokyo 196-8666 (JP)
(72) Inventor: SAKUMA, Yasutaka, Tokyo, 196-8666 (JP); NAKAYE, Yasukazu, Tokyo, 196-8666 (JP); SAKUMURA, Takuto, Tokyo, 196-8666 (JP)
(74) Representative: Lambacher, Michael

(57) **Abstract**

A radiation detector, a trigger signal generator, and a radiation analyzing system capable of synchronizing an external circuit are provided. A sensor 110 for generating pulses when radiation particles are detected by exposure, a counter 140 provided so that the pulse can be counted for each frame, a readout circuit 150 for reading out a count value generated by the counter 140, a control circuit 160 for controlling the exposure and the reading by a signal, and a trigger signal generating circuit 170 for generating a trigger-out signal, when one or a series of predetermined number of frames in which a High or Low interval is set is represented as one unit frame, for specifying the set High and Low intervals, are comprised.

## Description

### RELATED ART

### Field of the Invention

The present invention relates to a radiation detector, a trigger signal generator for generating a trigger-out signal for synchronization with an external circuit, and a radiation analyzing system comprising the same.

### Description of the Related Art

Conventionally, a technology of synchronizing with exposure of a radiation detector using a control signal of an external device has been known (see Non-Patent Document 1). For example, in the system described in Non-Patent Document 1, a trigger pulse is generated when a sample passes through positions with regular intervals on the basis of a calculated trajectory during continuous scanning, and a ptychographic data set is recorded at the largest 9kHz. In this way, the control signal of the external device may be used as the synchronization signal, or the signal specifying the start and end of the exposure time for the radiation detector may be used as the synchronization signal.

However, in recent years, a radiation detector that performs exposure by various methods has been developed. For example, imaging in a special mode such as continuous exposure (zero dead) or burst is known (see Patent Document 1 and Non-Patent Document 2). The radiation detector described in Patent Document 1 switches a counter performing counting pulses among a plurality of counters to perform continuous exposure. In the radiation detector described in Non-Patent Document 2, 14 frames of 2bit are continuously measured at high speed by using two 14bit counters and are collectively read out by 28bit.

In addition, imaging by high-speed exposure in an iterative mode or the like is also known (see Patent Document 2). The radiation detector described in Patent Document 2 reads a count value obtained by counting pulses generated by a sensor when particles of radiation are detected by two counters at respective threshold values using a switching circuit.

### Non-Patent Document

Non-patent Document 1: "High-speed X-ray ptychographic tomography", Darren Batey, Christoph Rau & Silvia Cipiccia, Scientific Reports, 12 May 2022 Non-patent Document 2: "Sub-microsecond-resolved multi-speckle X-ray photon correlation spectroscopy with a pixel array detector", Qingteng Zhang, Eric M. Dufresne, Suresh Narayanan, Piotr Maj, Anna Koziol, Robert Szczygiel, Pawel Grybos, Mark Sutton and Alec R. Sandy, Journal of Synchrotron Radiation (2018). 25, 1408-1416

### Patent Document

Patent Document 1: JP-Patent No. 6182758
Patent Document 2: JP-Patent No. 7088555

However, when imaging is performed in a special mode, such as a continuous exposure or a burst, the state for exposure time remains High during measuring a series of frames, and a signal specifying the beginning and end of the exposure time cannot be used as a synchronization signal for an external device. In imaging by high-speed exposure, the exposure time is too short to detect a signal for specifying the start and end of the exposure time as a synchronization signal. When the signal for specifying the start and end of the exposure time is used as the synchronization signal as it is, the synchronization may be difficult with the external device.

### SUMMARY OF THE INVENTION

The present invention has been made in view of such circumstances, and an object of the present invention is to provide a radiation detector, a trigger signal generator and a radiation analyzing system capable of synchronizing an external circuit with high accuracy and high efficiency with respect to radiation detection by generating a trigger-out signal that does not depend on an exposure or readout signal.
(1) In order to achieve the above object, the radiation detector of the present disclosure is a radiation detector for generating a trigger-out signal for synchronization with an external circuit, comprising a sensor for generating pulses when radiation particles are detected by exposure, a counter provided so that the pulse can be counted for each frame, a readout circuit for reading out a count value generated by the counter, a control circuit for controlling the exposure and the readout by a signal, a trigger signal generating circuit for generating a trigger-out signal, when one or a series of predetermined number of frames in which a High or Low interval is set is represented as one unit frame, for specifying the set High and Low intervals.
(2) Further, in the radiation detector according to (1), a start or end point of the High and Low intervals is set at one of a rising edge and a falling edge of an exposure time of the one unit frame, or at one of a rising edge and a falling edge of a readout time of the one unit frame.
(3) Further, in the radiation detector according to (1) or (2), each of the High and Low intervals comprises a readout time of the one unit frame.
(4) Further, in the radiation detector according to (3), the High and Low intervals are set at one of the rising edges of the exposure times in the one unit frame and are constant in the same measurement.
(5) In the radiation detector according to (3), the exposure time of one frame is 1000 µsec or less.
(6) Further, in the radiation detector according to any one of (1) to (5), a plurality of counters is provided, and the control circuit switches between a counter performing counting the pulses and a counter performing reading out the count value among the plurality of counters at a timing of generating the trigger-out signal and performs continuous exposure.
(7) Further, in the radiation detector according to (6), the one unit frame is a frame, and the trigger signal generating circuit generates a trigger-out signal in which the High and Low intervals are defined for each of rising edges of the exposure times in each frame.
(8) Further, in the radiation detector according to any one of (1) to (7), the High and Low intervals do not include readout times of the one unit frame and are set at a rising edge and a falling edge of an exposure time of the one unit frame and are constant for each measurement.
(9) Further, in the radiation detector according to any one of (1) to (8), further comprising a mode switching circuit for switching the setting of the exposure and readout timings among predetermined modes, wherein the control circuit controls the exposure and the readout according to the predetermined mode by a signal, and the trigger signal generating circuit generates a trigger-out signal in which the High and Low intervals are defined in response to the predetermined mode.
(10) Further, the trigger signal generator of the present invention is a trigger signal generator for generating a trigger-out signal for synchronizing an external circuit with a radiation detector for counting pulses generated when radiation particles are detected by exposure, for each frame, generating the trigger-out signal, when one or a series of predetermined number of frames in which a High or Low interval is set is represented as one unit frame, for specifying the set High and Low intervals.
(11) Further, the radiation analyzing system of the present invention is a radiation analyzing system for acquiring a radiation intensity distribution for each frame, comprising the radiation detector according to any one of (1) to (9), and a synchronization circuit operating in synchronization with the trigger-out signal generated by the radiation detector.
(12) Further, the radiation analyzing system of the present invention is a radiation analyzing system for acquiring a radiation intensity distribution for each frame, comprising the trigger signal generator according to (10), a radiation detector connected to the trigger signal generator, a synchronizing circuit for operating in synchronization with the trigger-out signal generated by the trigger signal generator.

### Brief Description of the Drawings

FIG. 1 is a schematic diagram mainly showing a configuration of a radiation detector according to a first embodiment.
FIG. 2 is a flowchart mainly showing the operation of the radiation detector of the first embodiment.
FIG. 3 is a timing chart of a case where a trigger-out signal is generated based on an operation of continuous exposure.
FIGS. 4A and 4B are schematic diagrams of conventional and inventive methods of measuring ptychography, respectively.
FIGS. 5A and 5B are schematic diagrams showing waveform-reproductions when the period of the trigger-out signal is respectively long and short with respect to the sampling period of the external synchronization circuit.
FIG. 6 is a timing chart showing a trigger-out signal when the continuous exposure is not performed.
FIG. 7 is a schematic diagram showing a configuration of a radiation detector according to a second embodiment.
FIG. 8 is a timing chart showing the operation of the iterative mode.
FIG. 9 is a timing chart showing the operation of the burst mode.
FIG. 10 is a plan view showing a configuration of a radiation analyzing system according to a third embodiment.
FIG. 11 is a side view showing a configuration of a radiation analyzing system according to a fourth embodiment.
FIG. 12 is a side view showing a configuration of a radiation analyzing system according to a fifth embodiment.

### DETAILED DESCRIPTION OF THE INVENTION

Next, embodiments of the present invention are described with reference to the drawings. To facilitate understanding of the description, the same reference numerals are assigned to the same components in the respective drawings, and duplicate descriptions are omitted.

### [First Embodiment]

### (Configuration of Radiation Detector)

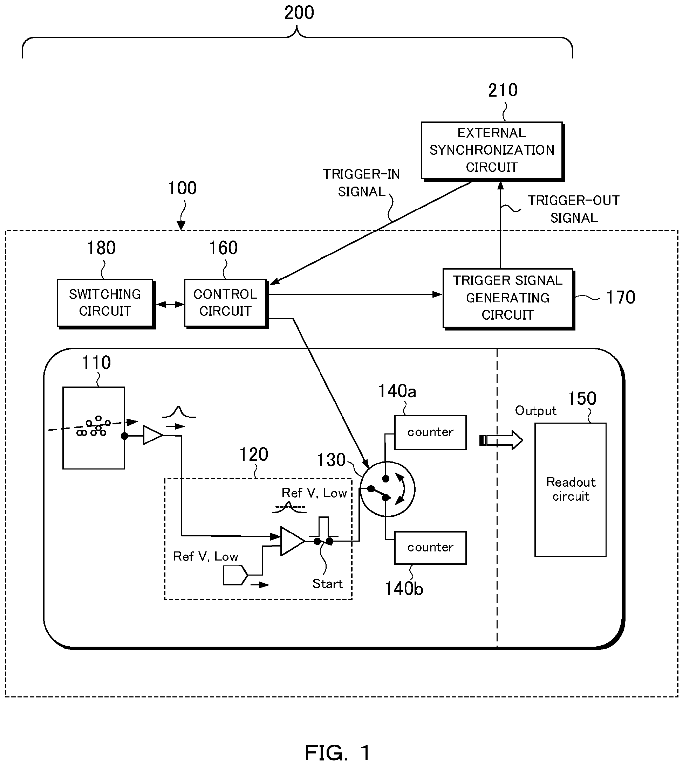

FIG. 1 is a schematic diagram mainly showing a configuration of a radiation detector 100. The radiation detector 100 is a detector that detects radiation while generating a trigger-out signal for synchronization with the external synchronization circuit 210. The radiation detector 100 is preferably a semiconductor detector having a two-dimensional data buffer function. The radiation to be detected causes the function to be easily exerted when it is an X-ray, but is not limited to an X-ray, and may be an α-ray, a β-ray, a γ-ray, a neutron ray or the like. The radiation detector 100 may be a one-dimensional detector.

The external synchronization circuit 210 is a circuit that synchronizes the trigger-out signal generated by the radiation detector 100 at a predetermined sampling rate. For example, a radiation irradiation system, a sample support mechanism or the like for ptychography can be connected to the external synchronization circuit 210 to correct the irradiation position of the radiation. The external synchronization circuit 210 may emit a trigger-in signal to start measurement by the radiation detector 100. For example, the shutter operation signal is a trigger-in signal. The radiation detector 100 and the external synchronization circuit 210 constitute the radiation analyzing system 200.

As shown in FIG. 1, the radiation detector 100 comprises a sensor 110, a detection circuit 120, a switching circuit 130, a first and second counter 140a and 140b, a readout circuit 150, a control circuit 160, a trigger signal generating circuit 170, and a mode switching circuit 180.

The sensor 110 generates pulses when radiation are detected by exposure. The sensor 110 can detect intensity of an X-ray flux incident on the receiving surface as plane information. Although FIG. 1 shows a configuration for one sensor 110 for convenience, the radiation detector 100 basically comprises a plurality of sensors and configurations respectively for the sensors.

When the state for exposure time is High, the detection circuit 120 determines whether the pulse is higher than the reference value, and when the pulse is higher than the reference value, the detection circuit 120 transmits the pulse as a voltage signal to a counter performing counting among the plurality of counters 140a and 140b. The switching circuit 130 switches a counter performing counting a voltage signal when the counter switching signal from the control circuit 160 is received. The two counters 140a and 140b each have an equivalent function and can count the pulses. The pulses can be counted for each frame. A frame is a time period during which an operation of acquiring a single image is performed. The frame is specified by the exposure time of one image for the normal exposure and the continuous exposure but is specified by the time combined the exposure time with the readout time in 2S mode described later. The readout circuit 150 reads the count value from the counter that has just finished counting. The memory in the readout circuit 150 stores the read count value.

The control circuit 160 starts the measurement upon receipt of the trigger-in signal. The control circuit 160 transmits a signal to the trigger signal generating circuit 170 when controlling the exposure and the readout. When the counter counting pulses is switched among the plurality of counters, the trigger signal generating circuit 170 generates a trigger-out signal. The readout circuit 150 performs readout from the counter 140a that has finished counting immediately therebefore between the timings of generating the trigger-out signals, so that the continuous exposure can be performed.

As described above, the control circuit 160 switches a counter performing counting pulses to and from a counter performing reading out a count value among the plurality of counters at a timing at which the trigger signal generating circuit 170 generates a trigger-out signal and performs continuous exposure. Thus, the external synchronization circuit 210 can be synchronized with the radiation detection while maintaining the duty ratio of the continuous exposures.

When one or a series of predetermined number of frames in which a High or Low interval is set is represented as one unit frame, the trigger signal generating circuit 170 generates a trigger-out signal specifying the set High and Low intervals. That is, a signal corresponding to each of a rising edge and a falling edge of the High and Low intervals of a frame of one unit can be used as a trigger-out signal. As described above, by generating the trigger-out signal independent of the exposure and readout signals, the external synchronization circuit 210 can be synchronized with the radiation detection with high accuracy and high efficiency. In this case, the exposure time is defined by the trigger-out signals at the rising and falling edges of the frame.

The start or end point of the High and Low intervals can be set at one of the rising and falling edges of the exposure time of one unit frame, or at one of the rising and falling edges of the readout time of one unit frame. Thus, the High and Low intervals can be set according to the application and the measuring condition, and a trigger-out signal suitable for the situation can be generated.

In particular, in the continuous exposure mode, the one unit frame is a frame, and the trigger signal generating circuit 170 preferably generates a trigger-out signal in which the High and Low intervals are defined at each rising edge of the exposure times of the frames. Thus, the radiation detection can be synchronized with the external circuit at a highly efficient duty ratio in the continuous exposure.

The mode switching circuit 180 can switch the setting of the exposure and readout timing between the predetermined modes. The switching is preferably performed under control of, for example, a PC in response to an instruction from the coordinator or the user. For example, the setting can be changed so as to generate a trigger-out signal of a waveform corresponding to the sampling rate of the external synchronization circuit 210. The predetermined modes include, for example, a normal mode, a continuous exposure mode, an iterative mode, and a burst mode.

The control circuit 160 controls the exposure and readout according to the predetermined mode by a signal, and the trigger signal generating circuit 170 generates a trigger-out signal for specifying the High and Low intervals according to the predetermined mode. Thus, the trigger-out signal can be generated for the predetermined mode that has been switched to according to the application or the measurement condition.

### (Operation of Radiation Detector)

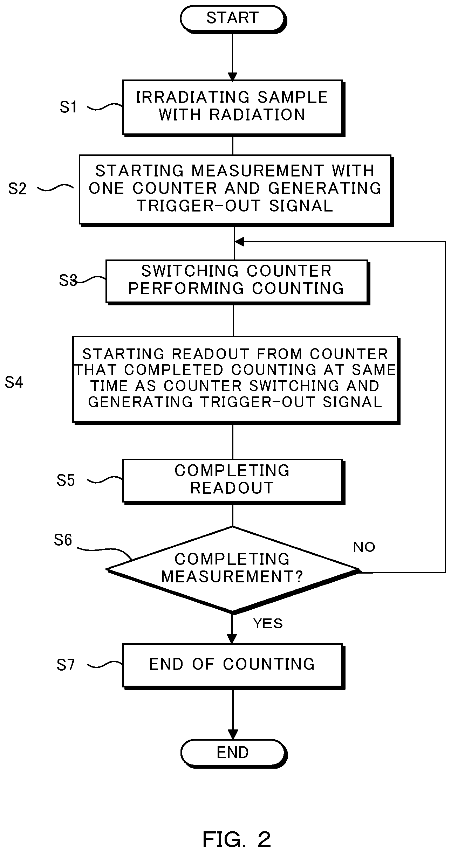

The operation of the radiation detector 100 configured as described above is described. FIG. 2 is a flowchart showing the operation of the radiation detector 100. Note that the operation of the continuous exposure mode shown in FIG. 2 is an example, and the operation is not limited to this.

First, the sample is irradiated with radiation (step S1). When particles of radiation entering the detection surface are detected respectively by the sensor 110, a pulse is generated. First, when the radiation measurement is started with one of the counters (step S2), the trigger signal generating circuit 170 generates a trigger-out signal that specifies a High interval. The pulses are counted in the one counter. Then, the control circuit 160 operates in response to a signal for specifying the start/end of the exposure period, thereby switching the counter performing counting the pulses among the plurality of counters 140a and 140b (step S3).

Simultaneously with the switching of the counter, the readout circuit 150 starts reading out the counting data from the counter that has finished counting, and the trigger signal generating circuit 170 generates a trigger-out signal for the Low interval (step S4). The counter performing counting maintains the counting, and the readout of the counting data from the counter that has finished the counting is completed before the timing of switching the counter (step S5).

Thereafter, it is determined whether or not the measurement has been completed (step S6), and if the measurement has not been completed, the process returns to step S3, and the counter is switched after reaching the High interval of the exposure period, and the trigger signal generating circuit 170 generates a trigger-out signal for specifying the High or Low interval. In this way, steps S3 to S6 are repeated until the measurement is completed. On the other hand, if it is determined in step 6 that the measurement has been completed, the counting is ended (steps S7), and the measurement is ended.

### (Timing Chart of Continuous Exposure)

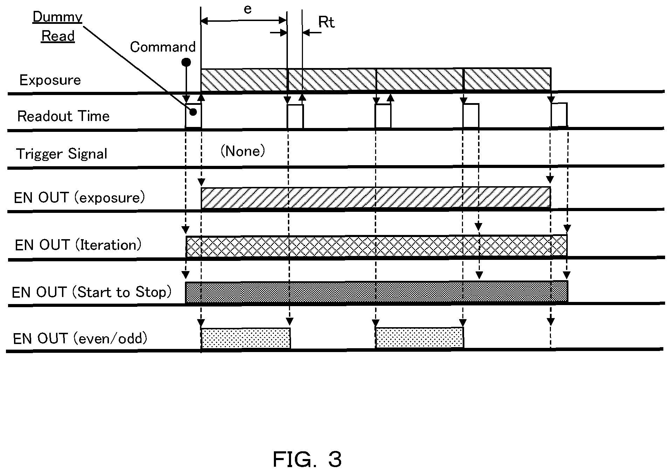

Next, the trigger-out signal is described with reference to a timing chart. FIG. 3 is a timing chart showing an operation of the continuous exposure. The "Command" shown in FIG. 3 indicates a point of time at which an instruction to start measurement is given. "Exposure" indicates the High and Low intervals of the exposure times. "Readout Time" indicates the readout times specified by ON and OFF of the readout operation. The radiation detector 100 initially performs a dummy readout operation, alternately switches the two counters, and continuously exposes and detects radiation without dead time. "e" indicates the exposure time, and "Rt" indicates the readout time.

"EN OUT (exposure)" indicates the High and Low intervals of the exposure times. ENOUT signal shown in this chart is a signal that identifies the beginning and the end of the exposure time and is a trigger-out signal. In the continuous exposure mode, after the dummy read operation, the High interval is continuous without any gaps, and the beginning of the readout operation prior to the completion of the measurement is the falling edge of the High interval. When this signal is used as a trigger-out signal for synchronizing with the external synchronization circuit 210, there is no change in the signal even when the exposure of one frame is completed, and therefore, an operation corresponding to the exposure of one frame cannot be performed.

"EN OUT (Iteration)" indicates the High and Low intervals in the time of iterative mode in which the exposure is iterated in one measurement. "EN OUT (Start to Stop)" indicates the High and Low intervals of measurement time from the start to the end of measurement.

"EN OUT (even/odd)" indicates alternating the High and Low intervals for each frame. The High interval is from the start to the end of the exposure of the odd-numbered frame, and the Low interval is from the start to the end of the exposure of the even-numbered frame. By switching H/L logic according to even/odd of the exposure, it is possible to generate a signal for detecting the position of the frame.

The trigger signal generating circuit 170 generates an ENOUT signal for specifying the start/end of such a frame as a trigger-out signal for synchronization with the external synchronization circuit 210, and thereby highly efficient and reliable synchronization can be performed. The external synchronization circuit 210 detects both rising and falling edges of the trigger-out signal. Note that the meanings of the names and symbols in the timing chart are the same as those in the following description unless otherwise specified.

### (Application to Ptychography)

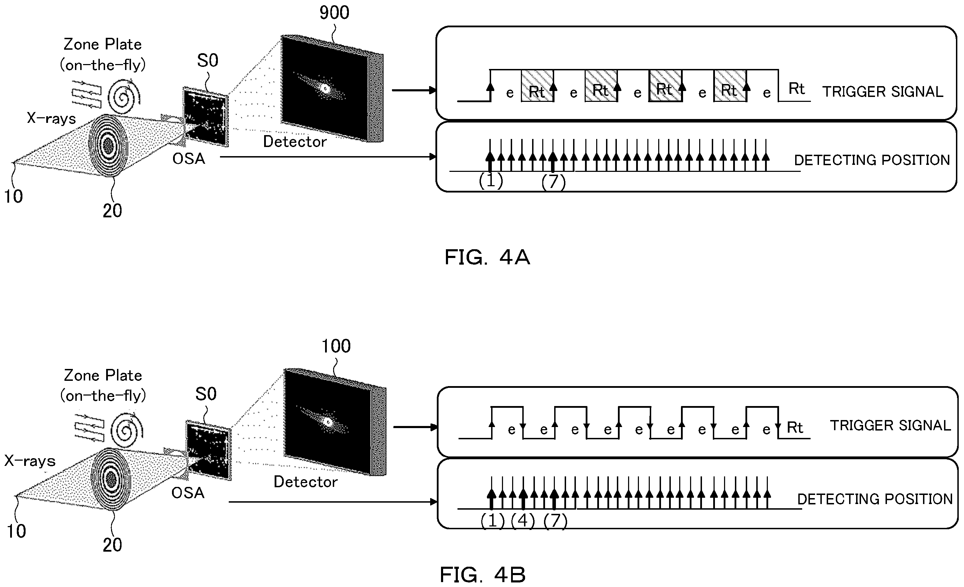

FIGS. 4A and 4B are schematic diagrams of conventional and inventive methods of measuring ptychography, respectively. In FIGS. 4A and 4B, the configuration of the X-ray irradiation system including the X-ray source 10 and the zone plate 20 and the sample S0 is the same. However, although the radiation detector 900 does not comprise a trigger-out signal generating circuit, the radiation detector 100 comprises a trigger signal generating circuit. It should be noted that the zone plate 20 can manipulate the irradiation position on the sample S0 and the ptychography measurement can be performed.

In the embodiment shown in FIG. 4A, if a signal for specifying the start and end of the exposure time is used as the trigger-out signal as it is, the continuous exposure is not possible, and therefore a dead time needs to be provided after the exposure section. If the position detection is performed on the rising edge of the trigger-out signal, the position detection is not performed until the seventh sampling after the first sampling, and the high sampling rate is not utilized.

In the embodiment shown in FIG. 4B, the trigger-out signal in which the High and Low intervals are alternately provided for each exposure of one frame is generated, therefore, as it is, the continuous exposure can be performed. The position can be detected at the rising edge and the falling edge of the trigger-out signal, and the position can be detected at the fourth and seventh sampling after the first sampling, so that the ptychography can be measured efficiently. The radiation detector 100 can be used not only for ptychography but also for correcting the positional accuracy of a radiation application such as tomography. It is also suitable for use in time matching between physical quantities such as temperature and exposure.

### (High-Speed Exposure)

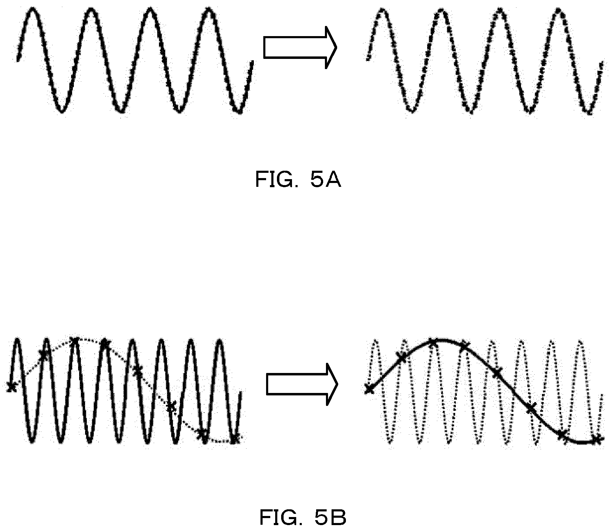

In the normal mode, the continuous exposure by switching the counter is not performed, for example, counting is ended by a signal from an external device, and readout is started. When the high-speed exposure is performed in the normal mode in which the counters are not switched, if a signal for specifying the start and end of the short exposure time is used as the trigger-out signal as it is, the external synchronization circuit 210 cannot detect the High interval of the trigger-out signal. FIGS. 5A and 5B are schematic diagrams showing waveform-reproductions when the period of the trigger-out signal is respectively long and short with respect to the sampling period of the external synchronization circuit.

In the embodiment shown FIG. 5A, since the period of the trigger-out signal is long with respect to the sampling period, the waveform of the trigger-out signal is reproduced as it is. In the embodiment shown FIG. 5B, since the period of the trigger-out signal is short with respect to the sampling period, a waveform that differs from the original waveform is reproduced.

As described above, in order for the external synchronization circuit 210 to accurately recognize the trigger-out signal, it is preferable that the period of the trigger-out signal is longer to some extent. Therefore, it is preferable that the High and Low intervals each include readout time of one unit frame. Thus, even when the external circuit cannot detect a signal for specifying the start and end of the exposure time due to the high-speed exposure, a detectable trigger-out signal can be generated if the readout time is sufficiently long with respect to the exposure time.

In terms of the period of the trigger-out signal, the High and Low intervals may be set to be the exposure time of two or more frames, respectively. The High and Low intervals are preferably set at one of the rising edges of the exposure time of one unit frame and are also preferably constant with the same measurement. It is easy to detect a trigger-out signal in which High and Low with a certain length are alternately repeated.

For example, when the synchronization CLK is about 20kHz, the gap time of the trigger-out signals needs to be set to 100 µsec or more. When a signal for specifying the start and end of the exposure time is used as the trigger-out signal as it is, 200 µsec including the exposure time of 100 µsec and the gap time of 100 µsec is the measurement time of one frame, and the exposure time is greatly reduced in the measurement of 5 kfps or more. By generating a trigger-out signal in which High or Low logic of 100 µsec or more is maintained separately from the signal specifying the start and end of the exposure time and setting the external synchronization circuit 210 edge-detectable, the frame rate can be simply improved from the measurement of 5 kHz to the measurement of 10 kHz.

There is a possibility to measure two applications at the same time by providing a signal covering a plurality of frames. For example, with a trigger-out signal in which the High and Low intervals are set at measurement time of 10 frame, it is possible to measure ptychography and to perform different measurements in other applications.

### (Application to Large Synchrotron Radiation Facilities)

The radiation detector 100 is suitable for use in a large synchrotron radiation facility such as Spring-8 that includes an accelerator group for accelerating and storing electrons, a laboratory facility for utilizing generated radiation and various additional facilities. In that case, the radiation detector 100 is incorporated as a part of the radiation detection device of the large synchrotron radiation facility.

For example, in Spring-8, an electron beam generated from an electron gun is accelerated to 1 GeV by a linear accelerator, and then introduced into a synchrotron to accelerate the electron beam to 8 GeV. In this case, 8 GeV can be used as a source of radiation, and the radiation can be generated by a deflecting electromagnet or an insert source. The generated radiation is directed through the beamline to an experimental station located inside or outside the storage ring. Note that the electron beam basically does not exist continuously in the ring but exists in a lump called a bunch. In the radiation detector 100, since the minimum interval time of exposure can be shortened, the bunch structure can be confirmed by synchronizing the operation of the detector with the bunch structure of the radiation facility.

In particular, the radiation detector 100 is effective when the exposure time of one frame is 1000 µsec or less, such as the measurement performed in such a large synchrotron radiation facility. Even in such a case, the external synchronization circuit 210 can synchronize with the trigger-out signal instead of the signal specifying the start and end of the exposure time.

### (Timing Chart of High-Speed Exposure)

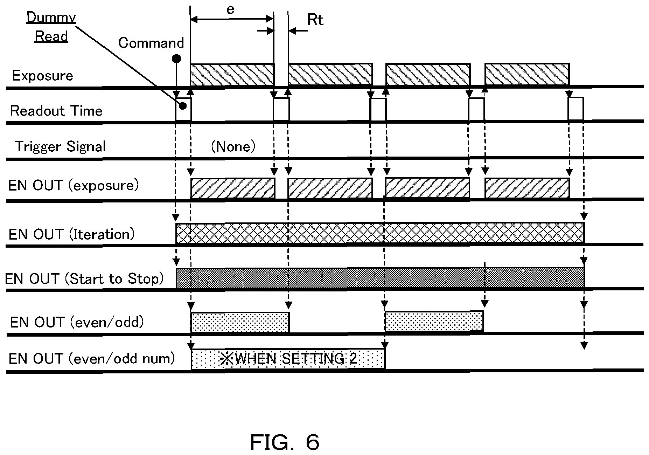

FIG. 6 is a timing chart showing a trigger-out signal when the continuous exposure is not performed. In this case, after the dummy readout operation, the exposure section and the readout section are alternately continued. In the case of the high-speed exposure, the exposure time e becomes smaller than the readout time Rt. Note that FIG. 6 shows the exposure time e as a long time for convenience, but it is actually an extremely short time. For example, a high-frame-rate radiation detectors, such as XSPA, has an extremely short High interval of exposure time, cannot recognize the signal constantly and cannot be synchronized with other circuit.

In the embodiment shown in FIG. 6, "EN OUT (even/odd)" indicates alternating the High and Low intervals for each frame. The High interval is from the start of the exposure to the end of the readout of the odd-numbered frame, and the Low interval is from the start of the exposure to the end of the readout of the even-numbered frame. Since each of these even/odd sections includes up to the readout time, it is not so short that each section cannot be detected even in the high-speed exposure. That is, since the duty ratio is 50%, the above-described issues are eliminated, and synchronization with other circuit is relatively easy.

"EN OUT (even/odd num)" is a trigger-out signal that specifies the High and Low intervals set for each of exposure times for two consecutive frames. The High and Low intervals may be set based on three or more frames instead of two frames. As described above, by using ENOUT signal for specifying the time including the exposure time of the plurality of frames, it is possible to use the trigger-out signal for specifying the long High and Low intervals. For example, even when the sampling period of the external synchronization circuit 210 cannot be improved, only the frequency of the trigger-out signal can be lowered without sacrificing the frame rate of the measurement. As a result, the external synchronization circuit 210 can reliably detect the trigger-out signal even in the high-speed exposure.

A processing apparatus such as a PC including a processor and a memory may be connected to the radiation analyzing system 200 and display a verification screen such as a signal for specifying the start and end of the exposure time or a sine chart of the trigger-out signal in response to a user's request. Thus, it is possible to verify whether or not the trigger-out signal is generated as set. The processing apparatus may be provided on a cloud.

### [Second Embodiment]

### (Configuration of Radiation Detector)

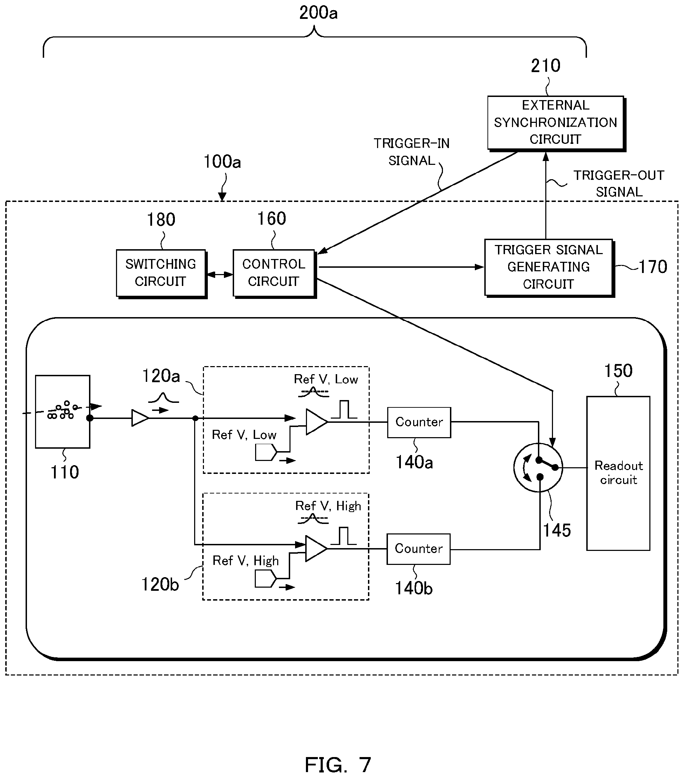

FIG. 7 is a schematic diagram showing a configuration of a radiation-detector 100a. The radiation detector 100a has a configuration similar to that of the radiation detector 100 but differs in a configuration comprising a plurality of detection circuits 120a and 120b, a plurality of counters 140a and 140b and a switching circuit 145. Since two Single Threshold are used, such a configuration is also referred to as a 2S.

The detection circuits 120a and 120b determine whether or not the pulse is higher than the respective reference value, and when the pulse is higher than the reference value, and they send the pulse to the counters 140a and 140b as a voltage signal. In the embodiment shown in FIG. 7, the reference value of the detection circuit 120a is set to be lower than the reference value of the detection circuit 120b.

The counters 140a and 140b may count the pulses. The readout circuit 150 reads out and stores the count value generated by the counters 140a and 140b from the counters 140a and 140b. The switching circuit 145 is controlled by the control circuit 160 and switches the counters 140a and 140 to be read out.

### (Iterative Mode)

In some cases, the radiation detector 100a is set to an iterative mode. The iterative mode is a mode in which the exposure is started by the trigger-in signal, the specified number of frames is measured, and the measurement is iterated a predetermined number of times.

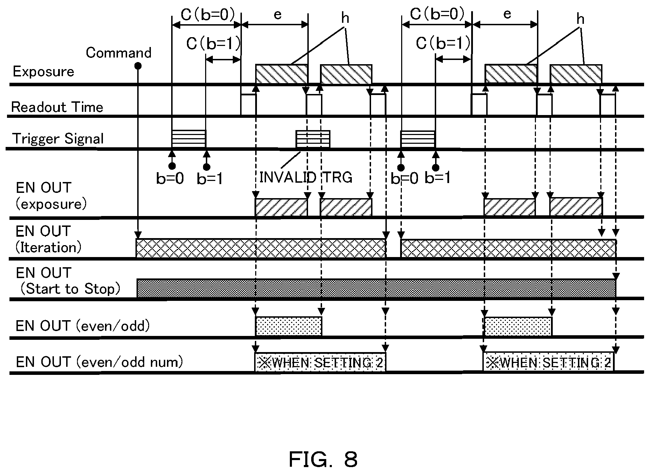

FIG. 8 is a timing chart showing the operation of the iterative mode. It is suitable when the command is sent once and then the operation is performed only with the trigger-out signal. The external synchronization circuit 210 can be synchronized with the exposure in the iterative mode by outputting a trigger-out signal for specifying the High and Low intervals for every two frames. The High and Low intervals may be set based on three or more frames instead of two frames. In the measurement started by receiving the command as described above, the command generated internally functions as a trigger signal for starting the operation of the detector.

### (Burst Mode)

The radiation detector 100a may also be set to a burst mode. The burst mode is a mode in which a plurality of frames is acquired by continuously exposing at a high speed using a plurality of counters per pixel and are read out collectively. For example, if two 14bit counters are provided per pixel, 14 frames can be continuously measured at high speed with 2bit per pixel and read out together at 28bit per pixel. The exposure time is sufficient to be shorter than usual, but the readout time is more than usual.

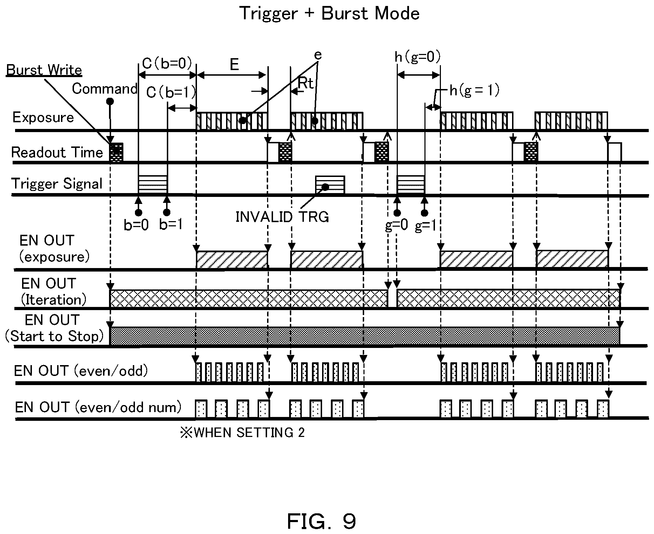

FIG. 9 is a timing chart showing the operation of the burst mode. When a ENOUT signal for specifying a High interval, which is an exposure time of a plurality of frames, and a Low interval, which is a readout time of the frames, is used, the external synchronization circuit 210 cannot synchronize with the exposure of each frame. By setting the High and Low intervals at the rising and falling edges of the exposure times of a single frame, the measurement can be made synchronized with the exposure of each frame.

Here, the High and Low intervals do not include the readout times of the frames and are constant for each measurement. As a result, for example, in the burst mode in which 14 frames can be continuously measured at high speed and read out collectively, the synchronization can be performed with an external circuit with high efficiency.

### [Third Embodiment]

### (Application to Single Crystal Structure Analysis Apparatus)

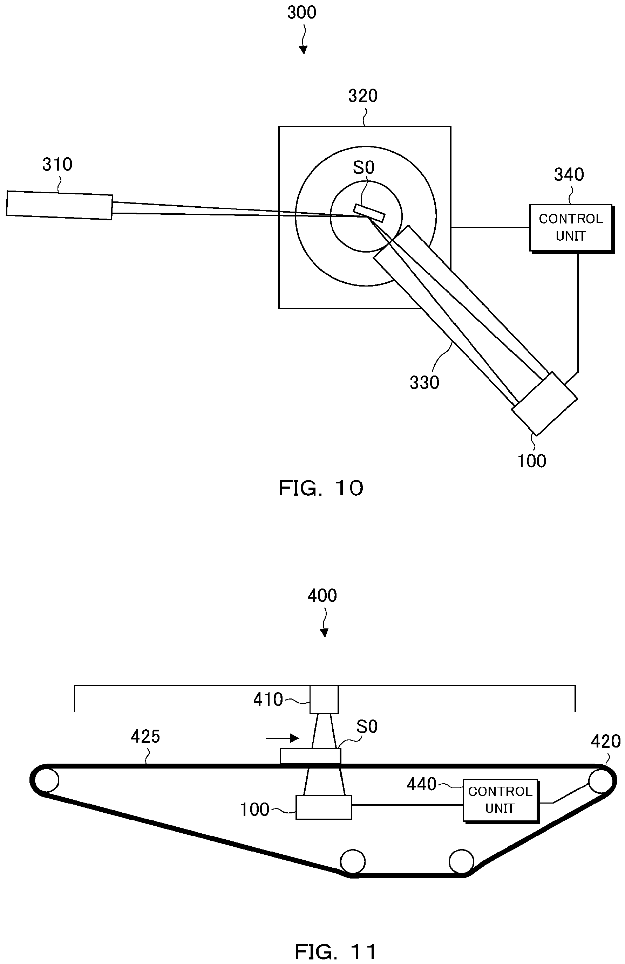

FIG. 10 is a plan view showing a configuration of the radiation analyzing system 300. The radiation analyzing system 300 is a single crystal structure analysis apparatus for capturing a diffraction X-ray image, and comprises an X-ray source 310, a sample stage 320, an arm 330, a control unit 340, and a radiation detector 100. The X-ray source 310 irradiates the sample S0 with X-rays.

The sample stage 320 and the arm 330 are interlocked with each other and can rotate around the sample S0 at a constant velocity under the control of the control unit 340. The radiation detector 100 is provided at an end portion of the arm 330 and controlled to move around the sample S0 together with the arm 330. In such an apparatus, the sample stage 320 and the arm 330 can be moved in synchronization with the trigger-out signal of the radiation detector 100. Thus, the radiation detector 100 is suitable for angle correction of an X-ray diffraction apparatus for a laboratory.

Further, for example, by starting exposure with a control signal for driving the arm 330 and using the trigger-out signal output from the radiation detector 100 while comparing with the control signal, it is also possible to correct the angle of the goniometer.

### [Fourth Embodiment]

### (Application to Production Line)

FIG. 11 is a diagram showing a side view showing a configuration of a radiation analyzing system. The radiation analyzing system 400 is a manufacturing line capable of X-ray inspection, and comprises an X-ray source 410, a roller 420, a belt 425, a control unit 440, and a radiation detector 100. The X-ray source 410 is shutter-less and continuously irradiates the sample S0 with X-rays.

Rotation of the roller 420 moves the belt 425, and the sample S0 moves in the direction indicated by the arrow in the drawing. The belt 425 moves at a constant speed under the control of the control unit 440. The radiation detector 100 is provided on the other side of the X-ray source 410 across the belt 425 and the product S0, and the product S0 is controlled to move together with the belt 425.

By comprising the radiation detector 100 as described above, the radiation analyzer 400 can move the sample S0 in synchronization with, for example, a trigger-out signal of the radiation detector 100 and can acquire images of the sample S0 by receiving a control signal corresponding to the moving velocity. In this case, since the image can be acquired with high efficiency, the moving speed of the product can be increased, and the processing efficiency of the process can be improved.

### [Fifth Embodiment]

### (Trigger Signal Generator)

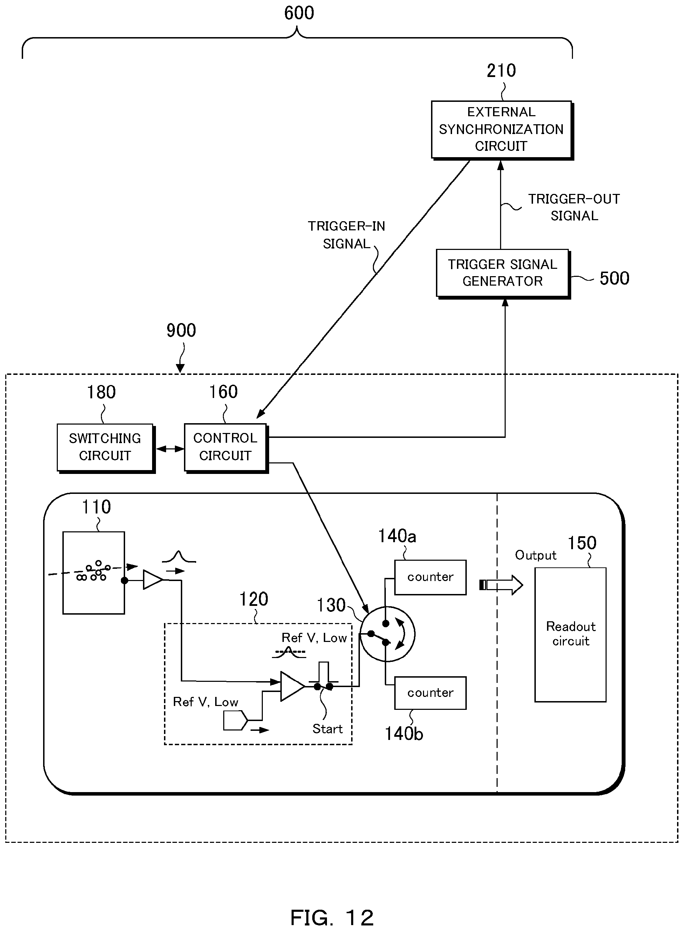

FIG. 12 is a schematic diagram mainly showing a configuration of the radiation detector 900. The radiation detector 900 counts, for each frame, pulses generated when particles of radiation are detected by exposure. The radiation detector 900 is configured similarly to the radiation detector 100 but does not comprise the trigger signal generating circuit 170. Alternatively, a trigger signal generator 500 is provided external to the radiation detector 900 and is connected to the radiation detector 900. The trigger signal generator 500 generates a trigger-out signal for synchronization with the external synchronization circuit 210. The radiation detector 900, the trigger signal generator and the external synchronization circuit 210 constitute the radiation analyzing system 600.

The external synchronization circuit 210 emits a trigger-in signal, and the control circuit 160 in the radiation detector 900 starts the measurement when the radiation detector 900 receives the trigger-in signal. The radiation detector 900 counts, for each frame, pulses generated when particles of radiation are detected by exposure. The trigger signal generator 500 generates a trigger-out signal for the external synchronization circuit 210 to synchronize.

When one or a series of predetermined number of frames is represented as one unit frame, the trigger signal generator 500 generates a trigger-out signal for specifying the High and Low intervals set for one unit frame. Thus, by generating a trigger-out signal that is not dependent on an exposure or readout signal, synchronization can be performed with an external circuit with high accuracy and high efficiency.

This application claims priority from Japanese Patent Application No. 2023-026382 filed on Feb. 22, 2023, the entire contents of Japanese Patent Application No. 2023-026382 are incorporated herein by reference.

### [Description of Symbols]

10 X-ray source
20 zone plate
100 and 100a radiation detector (present invention)
110 sensor
120, 120a and 120b detection circuit
130 and145 switching circuit
140 counter
140a and 140b first and second counter
150 readout circuit
160 control circuit
170 trigger signal generating circuit
180 mode switching circuit
200 radiation analyzing system
210 external synchronization circuit
300 radiation analyzing system
310 X-ray source
320 sample stage
330 arm
340 control unit
400 radiation analyzing system
410 X-ray source
420 roller
425 belt
440 control unit
500 trigger signal generator
600 radiation analyzing system
900 radiation detector (conventional)

## Claims

1. A radiation detector for generating a trigger-out signal for synchronization with an external circuit, comprising:
a sensor for generating pulses when radiation particles are detected by exposu re,
a counter provided so that the pulse can be counted for each frame,
a readout circuit for reading out a count value generated by the counter,
a control circuit for controlling the exposure and the readout by a signal,
a trigger signal generating circuit for generating a trigger-out signal, when one or a series of predetermined number of frames in which a High or Low interval is set is represented as one unit frame, for specifying the set High and Low intervals.

2. The radiation detector according to claim 1,
wherein a start or end point of the High and Low intervals is set at one of a rising edge and a falling edge of an exposure time of the one unit frame, or at one of a rising edge and a falling edge of a readout time of the one unit frame.

3. The radiation detector according to claim 1 or 2,
wherein each of the High and Low intervals comprises a readout time of the one unit frame.

4. The radiation detector according to claim 3,
wherein the High and Low intervals are set at one of the rising edges of the exposure times in the one unit frame and are constant in the same measurement.

5. The radiation detector according to claim 3,
wherein the exposure time of one frame is 1000 µsec or less.

6. The radiation detector according to any one of claims 1 to5,
wherein a plurality of counters is provided, and
the control circuit switches between a counter performing counting the pulses and a counter performing reading out the count value among the plurality of counters at a timing of generating the trigger-out signal and performs continuous exposure.

7. The detector according to claim 6,
wherein the one unit frame is a frame, and
the trigger signal generating circuit generates a trigger-out signal in which the High and Low intervals are defined for each of rising edges of the exposure times in each frame.

8. The radiation detector according to any one of claims 1 to 7,
wherein the High and Low intervals do not include readout times of the one unit frame and are set at a rising edge and a falling edge of an exposure time of the one unit frame and are constant for each measurement.

9. The radiation detector according to any one of claims 1 to 8, further comprising a mode switching circuit for switching the setting of the exposure and readout timings among predetermined modes,
wherein the control circuit controls the exposure and the readout according to the predetermined mode by a signal, and
the trigger signal generating circuit generates a trigger-out signal in which the High and Low intervals are defined in response to the predetermined mode.

10. A trigger signal generator for generating a trigger-out signal for synchronizing an external circuit with a radiation detector for counting pulses generated when radiation particles are detected by exposure, for each frame,
generating the trigger-out signal, when one or a series of predetermined number of frames in which a High or Low interval is set is represented as one unit frame, for specifying the set High and Low intervals.

11. A radiation analyzing system for acquiring a radiation intensity distribution for each frame, comprising:
the radiation detector according to any one of claims 1 to 9, and
a synchronization circuit operating in synchronization with the trigger-out signal generated by the radiation detector.

12. A radiation analyzing system for acquiring a radiation intensity distribution for each frame, comprising:
the trigger signal generator according to claim 10.
a radiation detector connected to the trigger signal generator,
a synchronizing circuit for operating in synchronization with the trigger-out signal generated by the trigger signal generator.
